# EUROPÄISCHE PATENTANMELDUNG

(11) **EP 2 034 177 A1**
(43) Veröffentlichungstag der Anmeldung: **11.03.2009**
(21) Anmeldenummer: 07115693.9
(22) Anmeldetag: 05.09.2007
(51) Int. Cl.: F03B 13/24, F03B 13/26, F03B 13/14

(54) **Verfahren und Vorrichtung zur Energiegewinnung aus Wasserkraft**

(71) Anmelder: Earthfly Holding GmbH, 6020 Innsbruck (AT)
(72) Erfinder: Peer, Thomas, 6170 Zirl in Tirol (AT)
(74) Vertreter: Wilhelms · Kilian & Partner Patentanwälte

(57) **Zusammenfassung**

Die Erfindung betrifft ein Verfahren zur Energiegewinnung und eine Vorrichtung zur Durchführung dieses Verfahrens, wobei ein Körper (1), der mit einem Gas gefüllt ist, unter Druck eines Gewässers einen Gasstrom erzeugt, der zur Energiegewinnung nutzbar ist, wobei der Körper (1) in einem energetisch günstigeren Zustand wieder mit Gas gefüllt wird.

## Beschreibung

Die Erfindung betrifft ein Verfahren zur Energiegewinnung unter Ausnutzung eines durch eine Wasserbewegung erzeugten Druckes und eine Vorrichtung zur Durchführung dieses Verfahrens.

In den letzten Jahren ist der globale Energiebedarf der Industriestaaten stetig gewachsen, was regelmäßig zu Spannungen an den weltweiten Energiemärkten führt. Gleichzeitig steigt die Anzahl der durch die weltweite Umweltverschmutzung verursachten Naturkatastrophen immer weiter an. Aus diesem Grund gewinnen ökologische Alternativen der Energiegewinnung immer weiter an Bedeutung.

Einen großen Teilbereich der regenerativen Energien stellt die Wasserkraft dar. Je nach Art des Gewässers kommen verschiedene Kraftwerke zum Einsatz, wobei für fließende Gewässer Flusskraftwerke, die einen durch eine Staumauer erzeugten Höhenunterschied zur Energiegewinnung nutzen, und für Küstengewässer Gezeitenkraftwerke genannt werden können.

Neueste Technologien sind zum Beispiel OWC-Kraftwerke (oscillating water column), die die Wellenbewegungen des Meeres an Küstenbereichen zur Energiegewinnung ausnutzen. Bei dieser Art von Kraftwerken wird die Wellenbewegung in eine Bewegung einer Luftsäule umgewandelt, welche wiederum eine Luftturbine antreibt.

Nachteil aller Lösungen zur Nutzung von Wasserkraft ist es, dass durch massive Baumaßnahmen in die Natur eingegriffen werden muss und diese nur örtlich begrenzt einsetzbar sind.

Aufgabe der Erfindung ist es, ein Verfahren und eine Vorrichtung zur Durchführung des Verfahrens zur Energiegewinnung zu schaffen, die örtlich flexibel, einfach und dadurch kostengünstig einzusetzen sind.

Diese Aufgabe wird mit einem Verfahren mit den Merkmalen des Patentanspruches 1 gelöst. Eine Vorrichtung zur Durchführung dieses Verfahrens ist Gegenstand des Patentanspruches 4.

Bevorzugte Ausführungen und Weiterbildungen des Verfahrens und der Vorrichtung sind Gegenstand der Unteransprüche.

Grundprinzip der Erfindung ist es, dass ein sich im Wasserstand änderndes Gewässer (z.B. die Änderung des Wasserstandes in Meeresgewässern in Form des Tidenhubs oder der Wellenbewegung) oder ein fließendes Gewässer (z.B. ein Fluss, eine Meeresströmung, eine Gezeitenströmung) auf einen Körper, der im Volumen veränderbar ist, Druck ausübt und der so erzeugte Druck zur Energieerzeugung verwendet wird.

Im Folgenden werden bevorzugte Ausführungsformen unter Bezug auf die beigefügten Figuren erläutert, wobei
Fig. 1 eine bevorzugte Ausführungsform der Erfindung in einem Küstenbereich mit starkem Tidenhub,
Fig. 2 eine bevorzugte Ausführungsform der Erfindung in einem Küstenbereich mit Wellengang,
Fig. 3 eine bevorzugte Ausführungsform der Erfindung in einem fließenden Gewässer und
Fig. 4 eine bevorzugte Ausführungsform der Erfindung, die ebenfalls in einem fließenden Gewässer zur Anwendung kommt, zeigt.

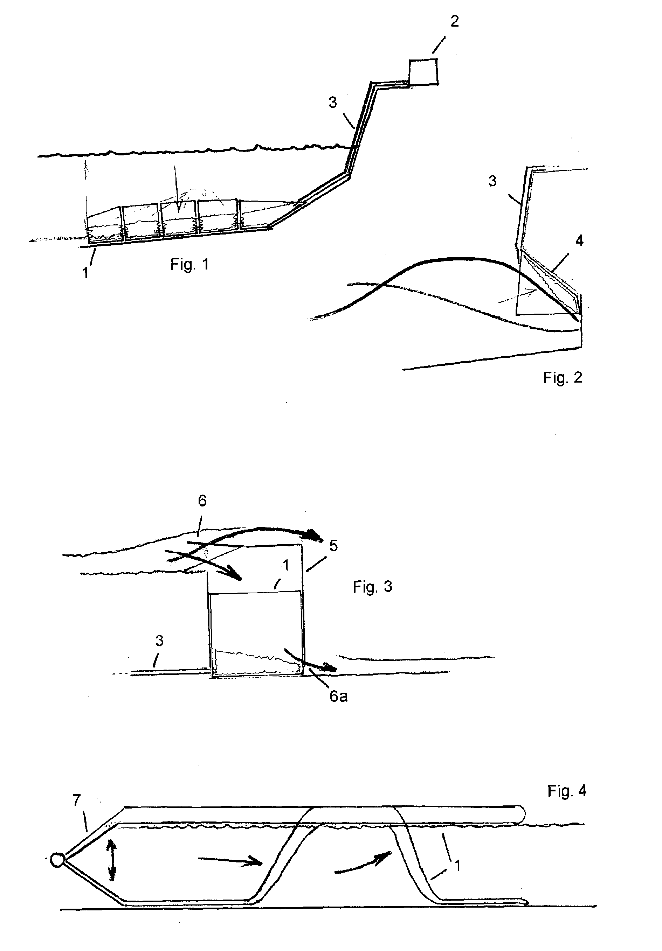

Fig. 1 zeigt eine bevorzugte Ausführungsform der Erfindung in einem Küstenbereich mit starkem Tidenhub. Hierbei werden Kammern 1 über eine beliebig große Fläche in diesem Küstenbereich an dem Meeresgrund vorgesehen. Die Befestigung der Kammern 1 kann durch Gewichte oder entsprechende Verankerungen bewerkstelligt werden. Jede Kammer 1 kann eine beliebige Form aufweisen und ist mit einem Gas, vorzugsweise mit Luft, gefüllt. Überspült in diesem Zustand die Flut die einzelnen Kammern 1, übt die über den Kammern stehende Wassermasse entsprechend ihrer Höhe Druck auf die Kammern aus. Die Kammern 1 sind aus einem flexiblen Material gebildet, das sich unter Druck leicht verformen lässt, womit das sich in den Kammern 1 befindliche Gas durch den Wasserdruck verdrängen lässt. Diese Verdrängung des Gases erzeugt einen Luftstrom, der energetisch nutzbar ist. Alle Kammern 1 können über entsprechende Anschlüsse miteinander verbunden werden, mit dem Ergebnis, dass der durch alle Kammern 1 erzeugte Luftstrom über eine an die Kammern 1 angeschlossene Leitung 3 einem außerhalb des Wassers angeordneten Abnehmer 2 zuführbar ist. Als Abnehmer 2 kann vorzugsweise eine Turbine oder ein Überdruckgenerator zur Erzeugung elektrischer Energie vorgesehen sein. Tritt nach teilweiser oder vollständiger Verdrängung des in den Kammern enthaltenen Gases die Ebbe ein, werden die entleerten Kammern 1 nach dem Zurückweichen des Wassers einem geringeren Druck ausgesetzt. Das Wasser muss aber nicht zwingend, wie in Fig. 1 gezeigt, vollständig zurückweichen. In diesem Zustand können die Kammern 1 unter Aufwendung geringerer Energie wieder mit Gas gefüllt werden. Eine mögliche Variante zur Befüllung der Kammern 1 ist es, diese so zu konstruieren, dass deren Hülle eine Eigenspannung besitzt, die bei atmosphärischem Druck ausreicht, die Kammer 1 wieder mit Gas zu füllen.

Nach erneutem Überspülen der Kammern 1, steht über die Leitung 3 dem Abnehmer 2 wieder Energie zur Verfügung. Obwohl in der Fig. 1 nicht gezeigt, kann in der Leitung 3 ein Ventil vorgesehen sein, das es ermöglicht, dass die Kammern 1 erst zu einem Zeitpunkt, in dem der vollständige Tidenhub erreicht ist, entleert werden. Folglich kann die gesamte potenzielle Energie des über den Kammern 1 stehenden Wassers genutzt werden.

Fig. 2 zeigt eine zweite bevorzugte Ausführungsform der Erfindung, in der die Kammer 1 mit einer Befestigungsvorrichtung 4 an einem steil in das Wasser laufenden Küstenabschnitt befestigt ist. Es sei aber erwähnt, dass die Befestigung nicht zwingend an einem steilen Abschnitt erfolgen muss. Die Kammern können auch an einem flach in das Wasser abfallenden Küstenabschnitt vorgesehen sein. Wie in der ersten Ausführungsform, können beliebig viele Kammern 1 miteinander verbunden werden, um somit die Fläche, auf die das Wasser wirkt, zu erhöhen. Liegt der Wasserstand unterhalb der an dem Küstenabschnitt befestigten Kammern 1, befinden sich diese wie in Fig. 2 gezeigt, in einem gefüllten Zustand. Trifft eine Welle auf die gefüllten Kammern 1, werden diese dem Druck der Welle ausgesetzt und ein Überdruck innerhalb der Kammern 1 erzeugt, der über eine zentrale Leitung 3 in Form eines Luftstroms einem Abnehmer 2 zuführbar ist. In Fig. 2 kann der Abnehmer 2 ebenfalls eine Vorrichtung wie in der ersten Ausführungsform sein.

In dieser Ausführungsform ist es vorteilhaft, die Kammern 1 mit Gewichten derart auszustatten, dass in dem Fall, in dem keine Welle Kraft auf die Kammern 1 ausübt, diese Gewichte die Expansion, d.h. die Befüllung, der Kammern 1 bewirken. Zur Unterstützung der Befüllung oder als Alternative zu dem Gewicht kann die Kammer 1 aus einem Material gebildet sein, das nach der Kraftausübung der Welle auf die Kammer 1 durch seine Eigenspannung die ursprüngliche Form der Kammer 1 bewerkstelligt. Besondere Falttechniken können hier ebenfalls zum Einsatz kommen. Die Verwendung eines solchen Materials und/oder einer besonderen Falttechnik sind nicht auf diese Ausführungsform beschränkt und können in allen Ausführungsformen verwendet werden. Folglich ist es möglich, einen Luftstrom durch die Leitung 3, sowohl in Richtung der Kammern 1, als auch aus den Kammern 1 zu erzeugen. Dieser oszillierende Luftstrom kann durch geeignete Turbinen, z.B. Wellsturbinen, effizient genutzt werden.

Fig. 3 zeigt eine weitere bevorzugte Ausführungsform der Erfindung, die in fließenden Gewässern einsetzbar ist. In dieser Ausführungsform ist die Kammer 1 in einer Vorrichtung 5 vorgesehen, die an ihrem oberen Ende eine Öffnung 6 und an ihrem unteren Ende eine Öffnung 6a aufweist. Die Vorrichtung 5 kann derart konstruiert sein, dass sie selbst ein fließendes Gewässer aufstaut oder kann in bestehende Anlagen, wie z.B. Tosbecken oder Kaskaden implementiert werden. Die Funktionsweise dieser Vorrichtung 5 ist wie folgend. Wenn die obere Öffnung 6 geöffnet ist, befindet die Kammer 1 sich in einem expandierten, gefüllten Zustand und das vor der Vorrichtung 5 aufgestaute Wasser kann in die Vorrichtung 5 eindringen. Durch die von dem Wasser ausgeübte Kraft wird das in der Kammer 1 befindliche Gas komprimiert, wodurch ein Luftstrom durch die Leitung 3 nach außen geführt werden kann. Ist die Kammer 1 vollständig entleert, schließt sich die obere Öffnung 6 der vollständig mit Wasser gefüllten Vorrichtung 5, um ein weiteres Eindringen des Wassers zu verhindern, und die untere Öffnung 6a wird geöffnet, wodurch das in die Vorrichtung 5 geflossene Wasser entweichen kann. Die Kammer 1 kann daraufhin nach vollständiger Entleerung mit sehr wenig Energieaufwand wieder mit Gas gefüllt werden, da diese nur atmosphärischem Druck ausgesetzt ist.

Werden mehrere Vorrichtungen 5 vorgesehen, ist es vorteilhaft, die in den Vorrichtungen 5 enthaltenen Kammern miteinander zu verbinden und die Steuerung der Öffnungen 6, 6a der jeweiligen Vorrichtungen 5 gegenläufig zu steuern, mit der Folge, dass die entleerte Kammer 1 gegenüber atmosphärischem Druck durch die Kraftausübung des Wassers auf eine in einer weiteren Vorrichtung 5 enthaltenen Kammer 1 gefüllt wird. Der zwischen den Kammern erzeugte Luftstrom kann über eine Leitung 3 zur Energiegewinnung genutzt werden. Es sei an dieser Stelle festgehalten, dass diese wechselseitige Arbeitsweise in allen Ausführungsformen möglich ist.

Fig. 4 zeigt eine weitere bevorzugte Ausführungsform der Erfindung, die in einem fließenden Gewässer einsetzbar ist, in der die Kammer 1 eine ausgedehnte Form aufweist. Ein Ende der Kammer 1 ist mit einem Hebel 7 verbunden, der zwischen der Wasseroberfläche des fließenden Gewässers und dem Grund des Gewässers verstellbar ist. Befindet sich der Hebel an der Wasseroberfläche kann der Körper 1 mit relativ geringem Energieaufwand mit Gas gefüllt werden, da der Körper 1 nur atmosphärischem Druck ausgesetzt ist. Wird der Hebel in Richtung des Grundes bewegt, übt das über die Kammer 1 fließende Wasser Druck auf diese aus, wodurch diese nach und nach unter Wasser gedrückt wird. Sobald sich ein Teil der Kammer 1 unter Wasser befindet, wird aufgrund des Wasserdruckes ein Luftstrom erzeugt. Ist die Kammer 1 vollständig entleert, befindet sie sich mit dem Hebel 7 in der in Fig. 4 gezeigten unteren Stellung. Mit Hilfe des Hebels 7 kann der Anfang der Kammer 1 an die Wasseroberfläche bewegt werden. Die unter die Kammer 1 greifende Strömung hebt diese nach und nach vollständig an die Wasseroberfläche. In Fig. 4 ist der Vorgang, in dem die Kammer unter Wasser gedrückt wird, auf der linken Seite gezeigt, während der umgekehrte Fall, d.h., dass die Kammer 1 an die Wasseroberfläche gehoben wird, auf der rechten Seite gezeigt ist.

Der so erzeugte Luftstrom kann wiederum zur Energieerzeugung über eine in Fig. 4 nicht gezeigte Leitung 3 einem Abnehmer 2 zugeführt werden.

Wie aus den obigen Ausführungen ersichtlich haben dieses Verfahren zur Energieerzeugung und die entsprechenden Vorrichtungen eine Reihe von Vorteilen gegenüber dem Stand der Technik. Alle Implementierungen und Installationen der Vorrichtungen können leicht und ohne erhebliche Baumaßnahmen durchgeführt werden, die bei Bedarf, ohne große Spuren zu hinterlassen, wieder entfernbar sind. Sie stellen somit eine sinnvolle ökologische und kostengünstige Alternative dar. Ein zusätzlicher Effekt ist z.B. der Küstenschutz oder die temporäre Beruhigung von Fließgewässern bei Baumaßnahmen. Außerdem können alle Elemente so zusammengeschaltet werden, dass die gewonnene Energie zentral umgewandelt und einfach an den Ort der Umwandlung geleitet werden kann.

## Patentansprüche

1. Verfahren zur Gewinnung von Energie, welches folgende Verfahrensschritte aufweist:
- Vorsehen eines im Volumen veränderbaren Körpers (1), wobei der Körper (1) mit einem Gas gefüllt ist,
- Anordnen des Körpers (1) an einem Ort, derart, dass Wasser Kraft auf den Körper (1) ausübt, wobei das in den Körper (1) gefüllte Gas komprimiert wird,
- Verbinden des Körpers (1) mit einem Abnehmer (2) über eine Verbindung (3), wobei dem Abnehmer (2) in Form von komprimiertem Gas gespeicherte Energie zugeführt wird.

2. Verfahren gemäß Anspruch 1, welches weiterhin aufweist:
- Füllen des im Volumen veränderbaren Körpers (1) mit Gas in einem Zustand, in dem auf den Körper (1) keine Kraft ausgeübt wird.

3. Verfahren gemäß Anspruch 2, welches weiterhin aufweist:
- Vorsehen eines weiteren im Volumen veränderbaren Körpers (1), der mit einem Gas gefüllt ist,
- Zyklisches Ausüben von Kraft auf die Körper (1) durch das Wasser, derart, dass der Körper (1), auf den Kraft ausgeübt wird, den Körper (1), auf den keine Kraft ausgeübt wird, mit Gas füllt,
- Abnehmen der in Form von komprimiertem Gas gespeicherten Energie zwischen den Körpern (1).

4. Vorrichtung zur Durchführung des Verfahrens, gemäß Anspruch 1, **dadurch gekennzeichnet, dass** die Vorrichtung einen im Volumen veränderbaren und mit Gas gefüllten Körper (1) aufweist, der mit einem Abnehmer (2) über eine Verbindung (3) verbunden ist, wobei der Abnehmer (2) bei Kraftausübung auf den Körper (1) mit in Form von komprimiertem Gas gespeicherter Energie versorgbar ist.

5. Vorrichtung, gemäß Anspruch 4, **dadurch gekennzeichnet, dass** in der Verbindung (3) ein Ventil vorgesehen ist, durch das der Zeitpunkt der Energienutzung bestimmbar ist.

6. Vorrichtung, gemäß Anspruch 4 oder 5, **dadurch gekennzeichnet, dass** der Körper (1) über eine Vorrichtung (4) an einem Ort befestigbar ist.

7. Vorrichtung, gemäß einem der Ansprüche 4 bis 6, **dadurch gekennzeichnet, dass** der Körper (1) in einem Gehäuse (5), mit dem fließendes Gewässer aufstaubar ist, vorgesehen ist und das Gehäuse (5) mit zwei verschließbaren Öffnungen (6, 6a) ausgestattet ist, wodurch die Belastung auf den Körper (1) durch das aufgestaute Wasser steuerbar ist.

8. Vorrichtung gemäß einem der Ansprüche 4 bis 6, **dadurch gekennzeichnet, dass** der Körper (1) mit einem Gewicht derart versehen ist, dass der Körper (1) in einem unbelasteten Zustand seine ursprüngliche Form annimmt.

9. Vorrichtung, gemäß Anspruch 4, **dadurch gekennzeichnet, dass** der Körper (1) in seiner Form länglich ausgebildet ist und die Verbindung (3) einen Hebel (7) durchläuft, der mit dem Körper (1) verbunden ist, wobei der Hebel (7) in alle Richtungen, in die der Körper (1) durch eine auf ihn durch ein fließendes Gewässer ausgeübte Kraft bewegbar ist, verstellbar ist.

10. Vorrichtung gemäß einem der Ansprüche 4 bis 9, **dadurch gekennzeichnet, dass** der Körper (1) aus einem eine Eigenspannung aufweisenden Material gebildet ist, wodurch der Körper (1) in einem unbelasteten Zustand seine ursprüngliche Form annimmt.

## Geänderte Patentansprüche

### Geänderte Patentansprüche gemäss Regel 137(2) EPÜ.

**1.** Vorrichtung zur Gewinnung nutzbarer Energie aus einem fließenden Gewässer, umfassend einen im Volumen veränderbaren und mit Gas gefüllten Körper (1), der mit einem Abnehmer (2) energiegekoppelt ist, wobei der Abnehmer (2) bei sich ändernden Volumen des Körpers (1) mit in Form von im komprimierten Gas gespeicherter Energie versorgbar ist, **dadurch gekennzeichnet, dass** der Körper (1) in einem Gehäuse (5), mit dem das fließende Gewässer aufstaubar ist, vorgesehen ist und das Gehäuse (5) eine verschließbare Einlassöffnung und eine verschließbare Auslassöffnung aufweist, die an unterschiedlichen Höhenniveaus des Körpers (1) angeordnet sind, und dass die Menge dem Abnehmer (2) zuführbarer Energie durch Ansteuerung der Ein- und Auslassöffnung steuerbar ist.

**2.** Vorrichtung gemäß Anspruch 1, **dadurch gekennzeichnet, dass** zwischen dem Körper (1) und dem Abnehmer (2) ein Ventil vorgesehen ist, durch das der Abnehmer (2) von dem Körper (1) entkoppelbar ist.

**3.** Vorrichtung gemäß Anspruch 1 oder 2, **dadurch gekennzeichnet, dass** eine Vielzahl von Gehäuse (5) vorgesehen sind, in denen jeweils ein Körper (1) angeordnet ist, die miteinander verbunden sind, und dass die Ansteuerung der Ein- und Auslassöffnungen der Vielzahl von Gehäuse (5) derart ist, dass ein Körper (1), dessen Volumen sich geändert hat, durch Änderung des Volumens eines weiteren Körpers (1) auf sein ursprüngliches Volumen gebracht wird.

**4.** Vorrichtung zur Gewinnung nutzbarer Energie aus einem fließenden Gewässer, umfassend einen im Volumen veränderbaren und mit Gas gefüllten Körper (1), der mit einem Abnehmer (2) energiegekoppelt ist, wobei der Abnehmer (2) bei sich ändernden Volumen des Körpers (1) mit in Form von im komprimierten Gas gespeicherter Energie versorgbar ist, **dadurch gekennzeichnet, dass** der Körper (1) in seiner Form länglich ausgebildet ist und an einem Ende mit einem verstellbaren Hebel (7), der von dem Gas durchströmbar ist, derart verbunden ist, dass die Menge dem Abnehmer (2) zuführbarer Energie durch Verstellung des Hebels (7) steuerbar ist.

**5.** Vorrichtung gemäß einem der Ansprüche 1 bis 3, **dadurch gekennzeichnet, dass** der Körper (1) aus einem elastischen Material gebildet ist.
